(19) Europäisches Patentamt
European Patent Office
Office européen des brevets

(11) EP 0 674 668 B1

(12) **EUROPÄISCHE PATENTSCHRIFT**

(45) Veröffentlichungstag und Bekanntmachung des Hinweises auf die Patenterteilung:
**20.08.1997 Patentblatt 1997/34**

(21) Anmeldenummer: **94901952.5**

(22) Anmeldetag: **03.12.1993**

(51) Int Cl.[6]: **C08F 110/06**

(86) Internationale Anmeldenummer:
**PCT/EP93/03397**

(87) Internationale Veröffentlichungsnummer:
**WO 94/13713 (23.06.1994 Gazette 1994/14)**

(54) **PROPYLEN-HOMOPOLYMERE**
PROPYLENE HOMOPOLYMERS
HOMOPOLYMERES DE PROPYLENE

(84) Benannte Vertragsstaaten:
**BE DE ES FR GB IT NL SE**

(30) Priorität: **16.12.1992 DE 4242486**

(43) Veröffentlichungstag der Anmeldung:
**04.10.1995 Patentblatt 1995/40**

(73) Patentinhaber: **BASF Aktiengesellschaft**
**67063 Ludwigshafen (DE)**

(72) Erfinder:
- **LANGHAUSER, Franz**
**D-67098 Bad Dürkheim (DE)**
- **KERTH, Juergen**
**D-67316 Carlsberg (DE)**

(56) Entgegenhaltungen:
**EP-A- 0 497 590** **EP-A- 0 518 092**
**EP-A- 0 553 491**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 674 668 B1

## Beschreibung

Die vorliegende Erfindung betrifft Propylen-Homopolymere mit einem Schmelzpunkt unter 155°C, xylollöslichen Anteilen unter 5 Gew.-%, einem Gewichtsmittelwert des Molekulargewichts $M_n$ von mindestens 117 000 und einer Molekulargewichtsverteilung von kleiner als 3.

Weiterhin betrifft die Erfindung Verfahren zur Herstellung derartiger Propylen-Homopolymeren, deren Verwendung zur Herstellung von Fasern, Folien und Formkörpern sowie die hierbei erhältlichen Fasern, Folien und Fomkörper.

Hochisotaktische, hochkristalline Propylen-Homopolymere zeichnen sich durch einen Schmelzpunkt von ca. 163°C und niedrige xylollösliche Anteile, verbunden mit hoher Steifigkeit aus. Insbesondere für Anwendungen im Folienbereich benötigt man jedoch flexible Produkte mit abgesenkter Kristallinität.

Bisher konnten diese Eigenschaften beim Polypropylen durch Absenken der Isotaktizität (vgl. DE-A 34 25 456) oder durch den Einbau von anderen Alk-1-enen, wie in der DE-A 40 11 160 beschrieben, erreicht werden.

Als Nachteil dieser Maßnahmen hat sich der Anstieg der xylollöslichen Anteile erwiesen; ein Effekt, der insbesondere für Anwendungen im medizinischen und Nahrungsmittelsektor unerwünscht ist.

Aufgabe der vorliegenden Erfindung war es daher, Propylen-Homopolymere zur Verfügung zu stellen, die sehr gute Verarbeitbarkeit zeigen, bei gleichzeitiger guter Anwendbarkeit, vor allem im medizinischen und Nahrungsmittelsektor.

Demgemäß wurden die eingangs definierten Propylen-Homopolymere gefunden.

Außerdem wurden Verfahren zur Herstellung derartiger Propylen-Homopolymeren, deren Verwendung zur Herstellung von Fasern, Folien und Formkörpern sowie die hierbei erhältlichen Fasern, Folien und Formkörper gefunden.

Die erfindungsgemäßen Propylen-Homopolymere weisen einen Schmelzpunkt unter 155°C, bevorzugt unter 150°C, xylollösliche Anteile unter 5 Gew.-%, vorzugsweise unter 2 Gew.-%, auf und eine Molekulargewichtsverteilung von kleiner als 3.

Unter der Molekulargewichtsverteilung wird das Verhältnis von $\overline{M}_w$:$\overline{M}_n$ verstanden, wobei $\overline{M}_w$ der Gewichtsmittelwert und $\overline{M}_n$ den Zahlenmittelwert darstellen.

Die erfindungsgemäßen Propylen-Homopolymere sind erhältlich durch Polymerisation von Propylen bei Temperaturen im Bereich von 0 bis 100°C und Drücken im Bereich von 1 bis 300 bar in Gegenwart von Katalysatorsystemen, die als aktive Bestandteile Metallocenkomplexe von Metallen der IV. und V. Nebengruppe des Periodensystems und oligomere Aluminiumoxidverbindungen aufweisen.

Die Polymerisation des Propylens kann in Lösung, in Emulsion, in Suspension, in Masse oder in der Gasphase durchgeführt werden. Besonders bevorzugt ist die Gasphasenpolymerisation, insbesondere bei Temperaturen im Bereich von 30 bis 100°C, bevorzugt 50 bis 90°C, und Drücken im Bereich von 7 bis 40 bar, bevorzugt 15 bis 35 bar.

Die zur Herstellung der erfindungsgemäßen Propylen-Homopolymere eingesetzten Katalysatorsysteme enthalten als aktive Bestandteile u.a. Metallocenkomplexe von Metallen der IV. und V. Nebengruppe des Periodensystems, insbesondere von Titan, Zirkonium, Hafnium, Vanadium, Niob oder Tantal. Vorzugsweise werden dabei solche Komplexverbindungen verwendet, bei denen das Metallatom über $\pi$-Bindungen mit ungesättigten cyclischen Kohlenwasserstoffresten verbunden ist, beispielsweise Cyclopentadienyl-, Fluorenyl- oder Indenylgruppen. Weiterhin sind die bevorzugt eingesetzten Komplexverbindungen dadurch gekennzeichnet, daß das Metallatom noch mit weiteren Liganden, insbesondere mit Fluor, Chlor, Brom und Iod oder einem $C_1$- bis $C_{10}$-Alkyl, beispielsweise einer Methyl-, Ethyl-, Propyl- oder Butylgruppe, verknüpft sein kann.

Besonders geeignete Metallocenkomplexe lassen sich durch folgende allgemeine Formel I kennzeichnen:

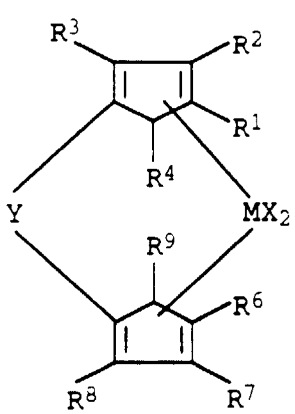

I

in der die Substituenten folgende Bedeutung haben:

| | |
|---|---|
| M | Titan, Zirkonium, Hafnium, Vanadium, Niob oder Tantal, |
| X | Fluor, Chlor, Brom, Iod, Wasserstoff, $C_1$- bis $C_{10}$-Alkyl, $C_6$- bis $C_{15}$-Aryl oder $-OR^5$, |
| wobei $R^5$ | $C_1$- bis $C_{10}$-Alkyl, $C_6$- bis $C_{15}$-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet, |
| $R^1$ bis $R^4$ | und $R^6$ bis $R^9$ Wasserstoff, $C_1$ bis $C_{10}$-Alkyl, 5- bis 7-gliedriges Cycloalkyl, das seinerseits $C_1$- bis $C_{10}$-Alkyle als Substituenten tragen kann, $C_6$- bis $C_{15}$-Aryl oder Arylalkyl, wobei gegebenenfalls auch zwei benachbarte Reste gemeinsam für 4 bis 15 C-Atome aufweisende cyclische gesättigte, teilweise gesättigte oder ungesättigte Gruppen stehen können, oder $Si(R^{10})_3$ mit |
| $R^{10}$ | $C_1$- bis $C_{10}$-Alkyl, $C_6$- bis $C_{15}$-Aryl oder $C_3$- bis $C_{10}$-cycloalkyl, |
| Y | für $R^{11}R^{12}Z\langle$ oder |

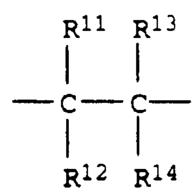

steht,

| | |
|---|---|
| wobei Z | Silicium, Germanium, Zinn oder Kohlenstoff bedeutet, |
| $R^{11}$,$R^{12}$,$R^{13}$,$R^{14}$ | Wasserstoff, $C_1$- bis $C_{10}$-Alkyl, $C_3$- bis $C_{10}$-Cycloalkyl oder $C_6$- bis $C_{15}$-Aryl, wobei gegebenenfalls auch zwei benachbarte Reste gemeinsam für 4 bis 15 C-Atome aufweisende cyclische Gruppen stehen können. |

Von den Verbindungen der Formel I sind diejenigen besonders geeignet, in denen

| | |
|---|---|
| $R^1$ und $R^6$ | gleich sind und für Wasserstoff oder $C_1$- bis $C_{10}$-Alkylgruppen stehen, |
| $R^4$ und $R^9$ | gleich sind und für Wasserstoff, eine Methyl-, Ethyl-, iso-Propyl- oder tert.-Butylgruppe stehen, |
| $R^2$, $R^3$, $R^7$ | und $R^8$ die Bedeutung $R^3$ und $R^8$ $C_1$ bis $C_4$-Alkyl $R^2$ und $R^7$ Wasserstoff haben oder zwei benachbarte Reste $R^2$ und $R^3$ sowie $R^7$ und $R^8$ gemeinsam für 4 bis 12 C-Atome aufweisende cyclische Gruppen stehen, |
| $R^{11}$,$R^{12}$,$R^{13}$ und $R^{14}$ | für Wasserstoff oder $C_1$- bis $C_8$-Alkyl, |
| M | für Zirkonium oder Hafnium und |
| X | für Chlor stehen. |

Beispiele für besonders geeignete Komplexverbindungen sind u.a.

Dimethylsilandiylbis(cyclopentadienyl)-zirkoniumdichlorid,
Dimethylsilandiylbis(indenyl)-zirkoniumdichlorid,
Dimethylsilandiylbis(tetrahydroindenyl)-zirkoniumdichlorid,
Ethylenbis(cyclopentadienyl)-zirkoniumdichlorid,

Ethylenbis(indenyl)-zirkoniumdichlorid,
Ethylenbis(tetrahydroindenyl)-zirkoniumdichlorid,
Ethylenbis(-2-methylindenyl)-zirkoniumdichlorid,
Ethylenbis(-2-methylindenyl)-hafniumdichlorid,
Ethylenbis(-2-methylbenzindenyl)-zirkoniumdichlorid,
Ethylenbis(-2-methylbenzindenyl)-hafniumdichlorid,
Dimethylethylen-9-fluorenylcyclopentadienylzirkoniumdichlorid,
Dimethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis(-3-tert.butyl-5-methylcyclopentadienyl)-dimethylzirkonium,
Dimethylsilandiylbis(-2-methylindenyl)-zirkoniumdichlorid,
Dimethylsilandiylbis(-2-isopropylindenyl)-zirkoniumdichlorid,
Dimethylsilandiylbis(-2-tert.-butylindenyl)-zirkoniumdichlorid,
Diethylsilandiylbis(-2-methylindenyl)-zirkoniumdibromid,
Dimethylsilandiylbis(-2-methyl-5-methylcyclopentadienyl)-zirkoniumdichlorid,
Dimethylsilandiylbis(-2-ethyl-5-isopropylcyclopentadienyl)-zirkoniumdichlorid,
Dimethylsilandiylbis(-2-methylbenzindenyl)-zirkoniumdichlorid, und
Dimethylsilandiylbis(-2-methylindenyl)-hafniumdichlorid.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist. Beispiele für entsprechende Herstellungsverfahren sind u.a. im Journal of Organometallic Chemistry, 369 (1989), 359-370 beschrieben.

Die Metallocenkomplexe können auch in kationischer Form vorliegen, wie in der EP-A 277 003 und der EP-A 277 004 beschrieben wird. Weiterhin kann auch µ-Oxo-bis-(chlorobiscyclopentadienyl)-zirkonium als Metallocenkomplex verwendet werden.

Neben den Metallocenkomplexen enthalten die zur Herstellung der erfindungsgemäßen Propylen-Homopolymere eingesetzten Katalysatorsysteme noch oligomere Aluminiumoxidverbindungen. Geeignet sind beispielsweise offenkettige oder cyclische Alumoxanverbindungen der allgemeinen Formeln II oder III

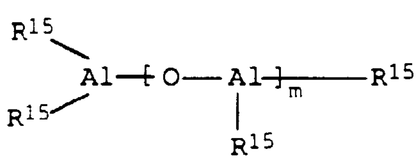

II

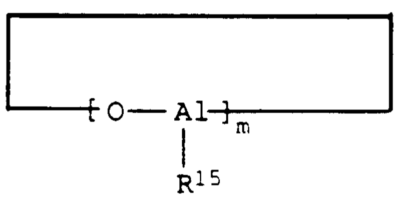

III

wobei $R^{15}$ eine $C_1$- bis $C_4$-Alkylgruppe, bevorzugt Methyl- oder Ethylgruppe bedeutet und m für eine ganze Zahl von 5 bis 30, bevorzugt 10 bis 25, steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4 794 096 beschrieben.

In der Regel liegen die dabei erhaltenen oligomeren Alumoxanverbindungen als Gemische unterschiedlich langer, sowohl linear als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen, vorliegen.

Es hat sich als vorteilhaft erwiesen, die Komplexverbindung von Metallen der IV. und V. Nebengruppe des Periodensystems und die oligomere Alumoxanverbindung in solchen Mengen zu verwenden, daß das atomare Verhältnis zwischen Aluminium aus der oligomeren Alumoxanverbindung und dem Übergangsmetall aus der Komplexverbindung von Metallen der IV. und V. Nebengruppe des Periodensystems im Bereich von 10:1 bis $10^6$:1, insbesondere im Bereich von 10:1 bis $10^4$:1, liegt.

Als Lösungsmittel für diese Katalysatorsysteme werden übliche aromatische Kohlenwasserstoffe eingesetzt, bevorzugt mit 6 bis 20 C-Atomen, insbesondere Xylole und Toluol sowie deren Mischungen.

Bei der Herstellung der erfindungsgemäßen Propylen-Homopolymeren hat es sich als vorteilhaft erwiesen, wenn ein geträgertes Katalysatorsystem eingesetzt wird. Geeignete Trägermaterialien sind beispielsweise Kieselgele, bevorzugt solche der Formel $SiO_2 \cdot a\ Al_2O_3$, worin a für eine Zahl im Bereich von 0 bis 2 steht, vorzugsweise 0 bis 0,5; dies sind also Alumosilikate oder Siliciumdioxid. Vorzugsweise weisen die Träger einen Teilchendurchmesser im Bereich von 1 bis 200 µm auf, insbesondere von 30 bis 80 µm. Derartige Produkte sind im Handel erhältlich, z.B. Silica Gel 332 der Fa. Grace.

Bei einem besonders bevorzugten Verfahren zur Herstellung der erfindungsgemäßen Propylen-Homopolymeren stellt man zuerst das Trägermaterial für den Katalysator her, dann erfolgt die Herstellung des geträgerten Katalysatorkomplexes und anschließend die Polymerisation.

Bei der Herstellung des Tragermaterials hat es sich als vorteilhaft erwiesen, die feuchten Kieselgele in Kohlenwasserstoffen, vorzugsweise in Heptan, zu suspendieren und mit Trialkylaluminium, vorzugsweise mit Triethylaluminium, zu versetzten, zu filtrieren und zu trocknen.

Zur Herstellung des geträgertern Katalysatorkomplexes geht man vorzugsweise so vor, daß man den Metallocenkomplex der allgemeinen Formel I mit Lösungsmittel versetzt, insbesondere mit Toluol, und hierzu eine Lösung von oligomeren Alumoxanverbindungen der allgemeinen Formeln II oder III gibt, vorzugsweise Methylalumoxan, wobei als Lösungsmittel insbesondere dasjenige verwendet wird, welches auch beim Metallocenkomplex eingesetzt wurde, also bevorzugt Toluol. Anschließend wird das Trägermaterial zugegeben, wobei das Gewichtsverhältnis von Katalysator zu Trägermaterial 10:1 bis 1000:1 ausmacht, bevorzugt 100:1 bis 500:1. Anschließend wird das Lösungsmittel entfernt und man erhält ein Katalysatorpulver.

Die eigentliche Polymerisation wird bevorzugt in der Gasphase durchgeführt, wobei man üblicherweise in einem Autoklaven Polypropylengrieß vorlegt und mit Trialkylaluminium, vorzugsweise Triethylaluminium, welches als Cokatalysator dient, versetzt. Das Gewichtsverhältnis von Polypropylengrieß zu Trialkylaluminium beträgt i.a. 10:1 bis 10000:1, bevorzugt 20:1 bis 200:1. Anschließend gibt man 30 Gew.-%, bezogen auf die Menge an Trialkylaluminium, an Trägerkatalysator zu, heizt auf Temperaturen bis 100°C, bevorzugt 70°C, auf und erhöht den Innendruck durch Propylenzufuhr bis auf 50 bar, vorzugsweise auf 28 bar. Nach beendeter Polymerisation wird der Autoklav entspannt und man erhält ein Propylen-Homopolymer, das nicht extrudiert ist und einen niedrigen Schmelzpunkt aufweist, geringe xylollösliche Anteile und eine enge Molekulargewichtsverteilung ohne vorherigen Abbau.

Die erfindungsgemäßen Propylen-Homopolymere zeigen sehr gute Verarbeitbarkeit bei gleichzeitiger guter Anwendbarkeit.

Beispiele

1. Herstellung des Trägermaterials

Zu einer Suspension von 20,2 g Kieselgel (Fa. Grace, SG 332, Teilchendurchmesser 20 - 45 µm) in 200 ml Heptan wurden bei Raumtemperatur während 30 min 56 ml einer Lösung von 6,4 g Triethylaluminium in 48 ml Heptan zugetropft. Dabei stieg die Temperatur auf 44°C an. Nach 18 h rühren bei Raumtemperatur wurde abfiltriert, zweimal mit je 30 ml Heptan und zweimal mit je 30 ml Pentan gewaschen und anschließend am Ölpumpenvakuum getrocknet.

2. Herstellung der geträgerten Metallocenkomponente

Zu 50 µmol Dimethylsilandiyl-bis(2-methylindenyl)zirkondichlorid Ia (24 mg) bzw. Dimethylsilandiyl-bis(2-methylbenzo[e]indenyl)zirkondichlorid Ib (29 mg) in 20 ml Toluol wurden 13,1 ml (20 mmol) einer Lösung von Methylalumoxan in Toluol (1,53 molar, Fa. Schering AG) gegeben und 15 min gerührt. Anschließend wurden 5 g des Trägermaterials zugegeben und weitere 30 min gerührt. Zuletzt wurde das Lösungsmittel bei Raumtemperatur während 4 h am Ölpumpenvakuum entfernt. Es entstand ein gut rieselfähiges Katalysatorpulver.

3. Polymerisation

In einem trockenen, mit Stickstoff gespülten 10-Liter-Autoklaven wurden nacheinander 20 g Polypropylengrieß und 12 ml Triethylaluminium (1 molare Lösung in Heptan) gegeben und 15 min gerührt. Anschließend wurden 1,5 g des Trägerkatalysators im Stickstoff-Gegenstrom in den Reaktor gefüllt und dieser verschlossen. Bei einer Rührerdrehzahl von 350 U/min wurde auf 70°C aufgeheizt und gleichzeitig der Innendruck stufenweise durch Propylenzufuhr bis zum Enddruck von 28 bar erhöht. Anschließend wurde 1,5 h polymerisiert, wobei durch die automatische Druckregelung Frischpropylen nachgeführt wurde. Nach beendeter Reaktion wurde während 10 min auf Atmosphärendruck entspannt und das entstandene Polymere im Stickstoffstrom ausgetragen. Die entsprechenden Polymerisationsbedingungen und -ergebnisse sind in der Tabelle aufgelistet.

Die Schmelzpunkte wurden mittels DSC-Messungen (10°C/min Aufheizrate) bestimmt. Die Bestimmung der Gewichtsmittelwerte $\overline{M}_w$ und der Zahlenmittelwerte $\overline{M}_n$ erfolgte durch Gelpermeationschromatographie. Die xylollöslichen Anteile wurden folgendermaßen bestimmt:

In einen 1-Liter-Dreihalskolben mit Rührer, Rückflußkühler und Thermometer wurden 500 ml destilliertes Xylol (Isomerengemisch) eingefüllt und auf 100°C erhitzt. Bei dieser Temperatur wurde das Polymere eingefüllt, anschließend auf den Siedepunkt des Xylols erhitzt und 60 min am Rückfluß gehalten. Anschließend wurde die Wärmezufuhr abgebrochen, innerhalb von 20 min mit einem Kältebad auf 5°C abgekühlt und dann wieder auf 20°C erwärmt. Diese Temperatur wurde für 30 min gehalten. Das ausgefallene Polymerisat wurde abfiltriert und von dem Filtrat exakt 100 ml in einen vorher tarierten 250-ml-Einhalskolben gefüllt. Daraus wurde das Lösungsmittel am Rotationsverdampfer entfernt. Anschließend wurde der verbleibende Rückstand im Vakuumtrockenschrank bei 80°C/200 Torr für 2 h getrocknet. Nach dem Erkalten wurde ausgewogen.

Der xylollösliche Anteil ergibt sich aus

$$x1 = \frac{g \times 500 \times 100}{G \times V}$$

x1 = xylollöslicher Anteil in %
g = gefundene Menge
G = Produkteinwaage
V = Volumen der eingesetzten Filtratmenge

Tabelle

| Beispiel | Metallocen | Ausbeute [g] | Produktivität [g/g Katalysator] | Schmelzpunkt [°C] | $\overline{M}_w$ | $\overline{M}_w/\overline{M}_n$ | xylollösliche Anteile [Gew.-%] |
|---|---|---|---|---|---|---|---|
| 1 | Ia | 1630 | 728 | 143,0 | 117000 | 2,13 | 1,4 |
| 2 | Ib | 1290 | 667 | 146,1 | 259000 | 2,33 | 0,6 |

**Patentansprüche**

1. Propylen-Homopolymere mit einem Schmelzpunkt unter 155°C, xylollöslichen Anteilen unter 5 Gew.-%, einem Gewichtsmittelwert des Molekulargewichts $M_n$ von mindestens 117.000 und einer Molekulargewichtsverteilung von kleiner als 3.

2. Propylen-Homopolymere nach Anspruch 1 mit einem Schmelzpunkt unter 150°C.

3. Propylen-Homopolymere nach den Ansprüchen 1 bis 2 mit xylollöslichen Anteilen unter 2 Gew.-%.

4. Propylen-Homopolymere nach den Ansprüchen 1 bis 3, erhältlich durch Polymerisation von Propylen bei Temperaturen im Bereich von 0 bis 100°C und Drücken im Bereich von 1 bis 300 bar in Gegenwart von Katalysatorsystemen, die als aktive Bestandteile Metallocenkomplexe von Metallen der IV. und V. Nebengruppe des Periodensystems und oligomere Aluminiumoxidverbindungen enthalten.

5. Propylen-Homopolymere nach den Ansprüchen 1 bis 4, erhältlich durch Polymerisation in der Gasphase bei Temperaturen im Bereich von 30 bis 100°C und Drücken im Bereich von 7 bis 40 bar.

6. Propylen-Homopolymere nach den Ansprüchen 1 bis 5, dadurch gekennzeichnet, daß als Metallocenkomplexe von Metallen der IV. und V. Nebengruppe des Periodensystems Metallocenkomplexe der allgemeinen Formel I

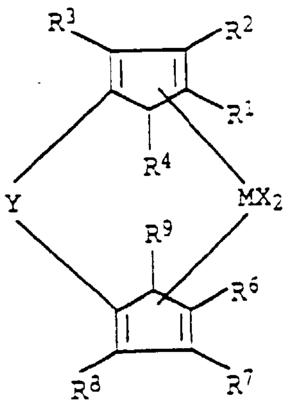

I

in der die Substituenten folgende Bedeutung haben:

| | |
|---|---|
| M | Titan, Zirkonium, Hafnium, Vanadium, Niob oder Tantal, |
| X | Fluor, Chlor, Brom, Iod, Wasserstoff, $C_1$- bis $C_{10}$-Alkyl, $C_6$- bis $C_{15}$-Aryl oder $-OR^5$, |
| wobei $R^5$ | $C_1$- bis $C_{10}$-Alkyl, $C_6$- bis $C_{15}$-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet, |
| $R^1$ bis $R^4$ | und $R^6$ bis $R^9$ Wasserstoff, $C_1$ bis $C_{10}$-Alkyl, 5- bis 7-gliedriges Cycloalkyl, das seinerseits $C_1$- bis $C_{10}$-Alkyle als Substituenten tragen kann, $C_6$- bis $C_{15}$-Aryl oder Arylalkyl, wobei gegebenenfalls auch zwei benachbarte Reste gemeinsam für 4 bis 15 C-Atome aufweisende cyclische Gruppen stehen können, oder $Si(R^{10})_3$ mit |
| $R^{10}$ | $C_1$- bis $C_{10}$-Alkyl, $C_6$- bis $C_{15}$-Aryl oder $C_3$- bis $C_{10}$-Cycloalkyl, |
| Y | für $R^{11}R^{12}Z<$ oder 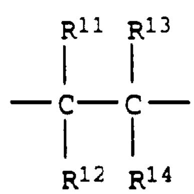 steht, |
| wobei Z | Silicium, Germanium, Zinn oder Kohlenstoff bedeutet, |
| $R^{11}, R^{12}, R^{13}, R^{14}$ | Wasserstoff, $C_1$- bis $C_{10}$-Alkyl, $C_3$- bis $C_{10}$-Cycloalkyl oder $C_6$- bis $C_{15}$-Aryl, wobei gegebenenfalls auch zwei benachbarte Reste gemeinsam für 4 bis 15 C-Atome aufweisende cyclische Gruppen stehen können, |

eingesetzt werden und als oligomere Aluminiumoxidverbindungen offenkettige oder cyclische Alumoxanverbindungen der allgemeinen Formeln II oder III

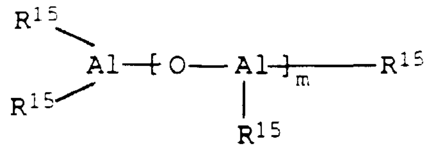

II

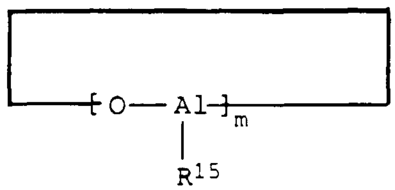

III

wobei $R^{15}$ eine $C_1$- bis $C_4$-Alkylgruppe bedeutet und m für eine ganze Zahl von 5 bis 30 steht.

7. Verfahren zur Herstellung von Propylen-Homopolymeren gemäß den Verfahrensbedingungen von Anspruch 4.

8. Verwendung der Propylen-Homopolymeren gemäß den Ansprüchen 1 bis 6 zur Herstellung von Fasern, Folien und Formkörpern.

9. Fasern, Folien und Formkörper, erhältlich aus den Propylen-Homopolymeren gemäß den Ansprüchen 1 bis 6 als wesentliche Komponenten.

## Claims

1. A propylene homopolymer having a melting point below 155°C, less than 5% by weight of xylene-soluble fractions, a weight average molecular weight Mn of at least 117,000 and a molecular weight distribution of less than 3.

2. A propylene homopolymer as claimed in claim 1, having a melting point below 150°C.

3. A propylene homopolymer as claimed in claim 1 or 2, having less than 2% by weight of xylene-soluble fractions.

4. A propylene homopolymer as claimed in any of claims 1 to 3, obtainable by polymerization of propylene at from 0 to 100°C and from 1 to 300 bar in the presence of a catalyst system which contains, as active components, a metallocene complex of a metal of subgroup IV or V of the Periodic Table and an oligomeric aluminum oxide compound.

5. A propylene homopolymer as claimed in any of claims 1 to 4, obtainable by polymerization in the gas phase at from 30 to 100°C and from 7 to 40 bar.

6. A propylene homopolymer as claimed in any of claims 1 to 5, wherein a metallocene complex of the formula I

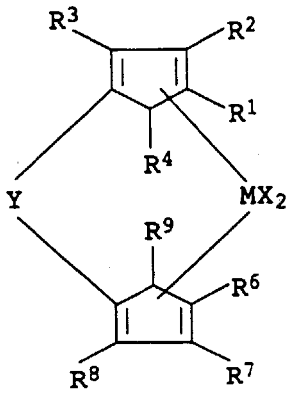

I

where

| | |
|---|---|
| M | is titanium, zirconium, hafnium, vanadium, niobium or tantalum, |
| X | is fluorine, chlorine, bromine, iodine, hydrogen, $C_1$-$C_{10}$-alkyl, $C_6$-$C_{15}$-aryl or $-OR^5$, |
| $R^5$ | is $C_1$-$C_{10}$-alkyl, $C_6$-$C_{15}$-aryl, alkylaryl, arylalkyl, fluoroalkyl or fluoroaryl, each having 1 to 10 carbon atoms in the alkyl radical and 6 to 20 carbon atoms in the aryl radical, |
| $R^1$ to $R^4$ | and $R^6$ to $R^9$ are each hydrogen, $C_1$-$C_{10}$-alkyl, 5-membered to 7-membered cycloalkyl, which in turn may carry $C_1$-$C_{10}$-alkyl radicals as substituents, $C_6$-$C_{15}$-aryl or arylalkyl, where two adjacent radicals together may furthermore form cyclic saturated, partially saturated or unsaturated groups of 4 to 15 carbon atoms, or $Si(R^{10})_3$, |
| $R^{10}$ | is $C_1$-$C_{10}$-alkyl, $C_6$-$C_{15}$-aryl or $C_3$-$C_{10}$-cycloalkyl, |
| Y | is $R^{11}R^{12}Z<$ or |

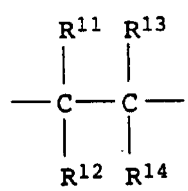

,

| | |
|---|---|
| Z | is silicon, germanium, tin or carbon and |
| $R^{11}$,$R^{12}$,$R^{13}$,$R^{14}$ | are each hydrogen, $C_1$-$C_{10}$-alkyl, $C_3$-$C_{10}$-cycloalkyl or $C_6$-$C_{15}$-aryl, where two adjacent radicals together may furthermore form cyclic groups of 4 to 15 carbon atoms, |

is used as the metallocene complex of a metal of subgroup IV or V of the Periodic Table and an open-chain or cyclic alumoxane compound of the formula II or III

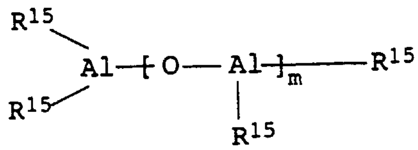

II

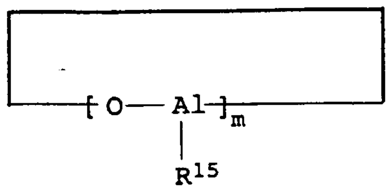

III

where $R^{15}$ is $C_1$-$C_4$-alkyl and m is an integer from 5 to 30, is used as the oligomeric aluminum oxide compound.

7. A process for the preparation of a propylene homopolymer under the process conditions of claim 4.

8. Use of a propylene homopolymer as claimed in any of claims 1 to 6 for the production of fibers, films and moldings.

9. A fiber, film or molding obtainable from a propylene homopolymer as claimed in any of claims 1 to 6 as an essential component.

**Revendications**

1. Homopolymères de propylène possédant un point de fusion inférieur à 155°C, une teneur en fractions solubles dans du xylène inférieure à 5% en poids, une valeur moyenne en poids du poids moléculaire Mn d'au moins 117.000 et une distribution du poids moléculaire inférieure à 3.

2. Homopolymères de propylène selon la revendication 1, dont le point de fusion est inférieur à 150°C.

3. Homopolymères de propylène selon les revendications 1 à 2, dont la teneur en fractions solubles dans du xylène est inférieure à 2% en poids.

4. Homopolymères de propylène selon l'une quelconque des revendications 1 à 3, que l'on obtient par polymérisation de propylène à des températures dans le domaine de 0 à 100°C et sous des pressions dans le domaine de 1 à 300 bar en présence de systèmes de catalyseurs qui contiennent, comme constituants actifs, des complexes de métallocènes de métaux des sous-groupes IV et V du tableau périodique et des composés oligomères d'oxyde d'aluminium.

5. Homopolymères selon l'une quelconque des revendications 1 à 4, que l'on obtient par polymérisation en phase gazeuse à des températures dans le domaine de 30 à 100°C et sous des pressions dans le domaine de 7 à 40 bar.

6. Homopolymères selon l'une quelconque des revendications 1 à 5, caractérisés en ce que, comme complexes de métallocènes de métaux des sous-groupes IV et V du tableau périodique, on met en oeuvre des complexes de métallocènes répondant à la formule générale I

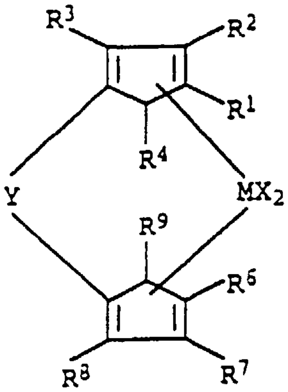

I

dans laquelle les substituants ont la signification ci-après:

M représente le titane, le zirconium, le hafnium, le vanadium, le niobium ou le tantale,

X représente un atome de fluor, un atome de chlore, un atome de brome, un atome d'iode, un atome d'hydrogène, un groupe alkyle en $C_1$-$C_{10}$, un groupe aryle en $C_6$-$C_{15}$ ou encore -$OR^5$,

où $R^5$ représente un groupe alkyle en $C_1$-$C_{10}$, un groupe aryle en $C_6$-$C_{15}$, un groupe alkylaryle, un groupe arylalkyle, un groupe fluoroalkyle ou un groupe fluoroaryle contenant respectivement de 1 à 10 atomes de carbone dans le radical alkyle et de 6 à 20 atomes de carbone dans le radical aryle,

$R^1$ à $R^4$ et $R^6$ à $R^9$représentent un atome d'hydrogène, un groupe alkyle en $C_1$-$C_{10}$, un groupe cycloalkyle comprenant de 5 à 7 membres qui, pour sa part, peut porter des groupes alkyle en $C_1$-$C_{10}$ à titre de substituants, un groupe aryle en $C_6$-$C_{15}$ ou un groupe arylalkyle, dans lesquels, le cas échéant, deux radicaux voisins peuvent également représenter ensemble des groupes cycliques présentant de 4 à 15 atomes de carbone, ou encore $Si(R^{10})_3$ où

$R^{10}$ représente un groupe alkyle en $C_1$-$C_{10}$, un groupe aryle en $C_6$-$C_{15}$ ou un groupe cycloalkyle en $C_3$-$C_{10}$,

Y représente $R^{11}R^{12}Z<$ ou

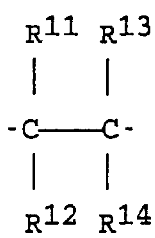

où Z représente le silicium, le germanium, l'étain ou le carbone,

$R^{11}$, $R^{12}$, $R^{13}$, $R^{14}$représentent un atome d'hydrogène, un groupe alkyle en $C_1$-$C_{10}$, un groupe cycloalkyle en $C_3$-$C_{10}$ ou un groupe aryle en $C_6$-$C_{15}$, dans lesquels, le cas échéant, deux radicaux voisins peuvent également représenter ensemble des groupes cycliques présentant de 4 à 15 atomes de carbone,

et, à titre de composés oligomères d'oxyde d'aluminium,
des composés d'alumoxane à chaînes ouvertes ou cycliques répondant aux formules générales II ou III

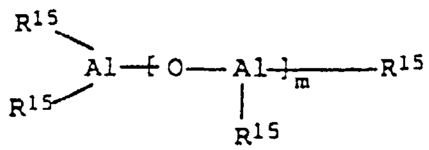

II

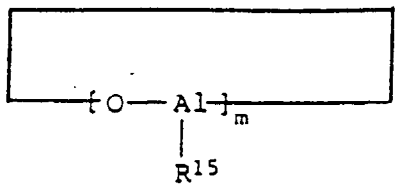

III

dans lesquelles
$R^{15}$ représente un groupe alkyle en $C_1$-$C_4$ et m représente un entier de 5 à 30.

7. Procédé pour la préparation d'homopolymères de propylène dans les conditions opératoires selon la revendication 4.

8. Utilisation des homopolymères de propylène selon les revendications 1 à 6, pour la fabrication de fibres, de feuilles et de corps moulés.

9. Fibres, feuilles et corps moulés que l'on obtient à partir des homopolymères de propylène selon les revendications 1 à 6, à titre de composants essentiels.